# EUROPEAN PATENT APPLICATION

(11) **EP 1 795 878 A1**
(43) Date of publication of application: **13.06.2007**
(21) Application number: 05778254.2
(22) Date of filing: 08.09.2005
(51) Int. Cl.: G01L 5/00, B60R 21/00

(54) **SHOCK DETECTION OPTICAL FIBER SENSOR**

(30) Priority: 08.09.2004 JP 2004261232
(71) Applicant: HITACHI CABLE, LTD., Tokyo 101-8971 (JP); DENSO CORPORATION, Kariya-city, Aichi-pref. 448-8661 (JP)
(72) Inventor: HISHIDA, Yasuyuki, Hitachi Cable, Ltd., Tokyo 1018971 (JP); ABE, Tomiya, Hitachi Cable, Ltd., Tokyo 1018971 (JP); NAKAI, Hisanori, Hitachi Cable, Ltd., Tokyo 1018971 (JP); SATO, Soichi, Hitachi Cable, Ltd., Tokyo 1018971 (JP); IKEDA, Yukio, Hitachi Cable, Ltd., Tokyo 1018971 (JP); FUKUSHI, Morihisa, Hitachi Cable, Ltd., Tokyo 1018971 (JP); SUZUKI, Akira, Denso Corporation, Aichi 448-8661 (JP); KOBAYASHI, Shigenori, Denso Corporation, Kariya-city, Aichi 448-8661 (JP); TAKAHASHI, Hiroyuki, Toyota Motor Corporation, Toyota-city, Aichi 471-8571 (JP); KACHU, Ryotaro, Toyota Motor Corporation, Toyota-city, Aichi 471-8571 (JP); IYODA, Motomi, Toyota Motor Corporation, Toyota-city, Aichi 471-8571 (JP)
(74) Representative: Gill, David Alan
(86) International application number: PCT/JP2005/016558
(87) International publication number: WO 2006/028192

(57) **Abstract**

A shock detection optical fiber sensor includes: a plastic fiber; a corrugated plate having a plurality of protrusions arranged in the longitudinal direction of the plastic optical fiber and formed to oppose to the plastic optical fiber; a mold plate covering the plastic optical fiber and the corrugated plate; a light emitting element connected to one end of the plastic optical fiber; and a light receiving element connected to the other end of the plastic optical fiber.

## Description

### TECHNICAL FIELD

The present invention relates to a shock detection optical fiber sensor for detecting a shock due to collision.

### BACKGROUND ART

A shock detection optical fiber sensor is studied that is provided in a vehicle such as an automobile or the like, and that senses (detects) a shock due to its collision with another vehicle, an obstacle, etc. (For example, JP-A-2002-531812). There is a conventional shock detection optical fiber sensor in which an optical fiber is wound around an elastic support, and which has a light-emitting element connected to one end of the optical fiber, and a light-receiving element connected to the other end thereof (For example, JP-A-09-26370). When a shock is applied to this sensor, the support deforms, and the optical fiber deforms with the deformation of the support. This deformation causes a variation in quantity of light transmitted through the optical fiber, and from this variation, the shock is sensed. As this optical fiber, there can be used a plastic optical fiber (POF) (For example, JP-A-05-249352). However, the conventional shock detection optical fiber sensor has a problem with shock resistance: The problem is that the POF is broken in the event of a large shock applied to the sensor.

On the other hand, to prevent the POF from being broken, it is thought that a load due to the shock is less applied to the POF to thereby enhance the shock resistance, but in this case, there is the problem that it is not possible to detect a small shock (i.e., that the sensor sensitivity decreases).

Cited reference 1: JP-A-2002-531812
Cited reference 2: JP-A-09-26370
Cited reference 3: JP-A-05-249352

### DISCLOSURE OF INVENTION

Accordingly, it is an object of the present invention to provide a shock detection optical fiber sensor with enhanced sensor sensitivity and POF shock resistance.
(1) According to a first aspect of the present invention, a shock detection optical fiber sensor comprises:
   a plastic optical fiber;
   a corrugated plate comprising a plurality of protrusions arranged in a longitudinal direction of the plastic optical fiber, and formed opposite the plastic optical fiber;
   a mold plate covering the plastic optical fiber and the corrugated plate;
   a light emitting element connected to one end of the plastic optical fiber; and
   a light receiving element connected to the other end of the plastic optical fiber.

In the above invention (1), the following modifications and changes can be made.
(i) The corrugated plate comprises a plurality of corrugated plates arranged in the longitudinal direction of the plastic optical fiber,

(ii) The plastic optical fiber comprises the cladding layer whose thickness is not less than 4% thinner than a cladding layer of a generally used plastic optical fiber.

(iii) The plastic optical fiber comprises an elliptic cross section whose minor axis is perpendicular to the corrugated plate.
(2) According to a second aspect of the invention, a shock detection optical fiber sensor comprises:
a plastic optical fiber;
a corrugated plate comprising a plurality of protrusions arranged in a longitudinal direction of the plastic optical fiber, and formed opposite the plastic optical fiber;
a mold plate covering the plastic optical fiber and the corrugated plate;
a light emitting element connected to one end of the plastic optical fiber; and
a light receiving element connected to the other end of the plastic optical fiber,
wherein the plurality of protrusions comprise a substantially trapezoidal protrusion comprising a planar portion formed opposite the plastic optical fiber.

In the above invention (2), the following modifications and changes can be made.

(iv) The plurality of protrusions comprise a curved protrusion comprising a curved portion formed opposite the plastic optical fiber.
(v) The plurality of protrusions comprise the substantially trapezoidal protrusion and the curved protrusion arranged alternately.

(vi) The plurality of protrusions comprise curved portions formed on both sides of the planar portion in the longitudinal direction of the plastic optical fiber.

(vii) The plurality of protrusions comprise planar portions whose lengths are mutually different in the longitudinal direction of the plastic optical fiber.
(3) According to a third aspect of the invention, a shock detection optical fiber sensor comprises:
a plastic optical fiber;
a corrugated plate comprising a plurality of protrusions arranged in a longitudinal direction of the plastic optical fiber, and formed opposite the plastic optical fiber;
a mold plate covering the plastic optical fiber and the corrugated plate;
a light emitting element connected to one end of the plastic optical fiber; and
a light receiving element connected to the other end of the plastic optical fiber,
wherein the plurality of protrusions comprise a curved protrusion comprising a curved portion formed opposite the plastic optical fiber, the curved protrusion comprising 2 or more protrusions that are different in height.

In the above invention (3), the following modifications and changes can be made.

(viii) The curved protrusion comprises high and low protrusions that are mutually different in height, and the high and low protrusions are arranged alternately.
The present application is based on Japanese patent application No.2004-261232, the entire contents of which are incorporated herein by reference.

### BRIEF DESCRIPTION OF DRAWINGS

FIG.1A is a side view illustrating a shock detection optical fiber sensor in a first preferred embodiment according to the present invention, and FIG.1B is a cross-sectional view illustrating the shock detection optical fiber sensor of the first embodiment.
FIG.2 is a cross-sectional view illustrating a shock detection optical fiber sensor in a second preferred embodiment according to the present invention.
FIG.3A is a side view illustrating a shock detection optical fiber sensor in a third preferred embodiment according to the present invention, and FIG.3B is a cross-sectional view illustrating the shock detection optical fiber sensor of the third embodiment.
FIG. 4A is a side view illustrating a shock detection optical fiber sensor in a fourth preferred embodiment according to the present invention, and FIG. 4B is a cross-sectional view illustrating the shock detection optical fiber sensor of the fourth embodiment.
FIG.5 is a side view illustrating deformation of a POF when a large shock is applied to the shock detection optical fiber sensor shown in FIG.4A.

### BEST MODE FOR CARRYING OUT THE INVENTION

The preferred embodiments according to the invention will be explained below referring to the drawings.

### Embodiment 1

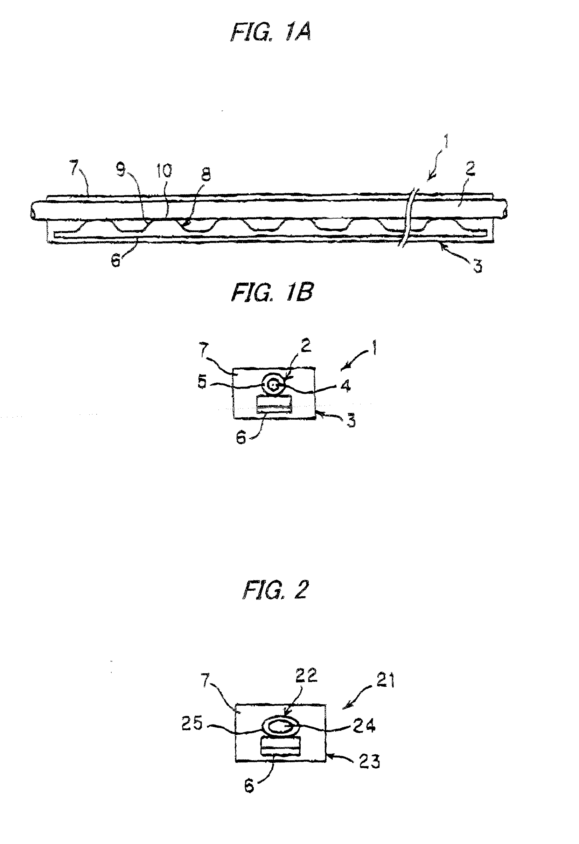

FIG.1A is a side view illustrating a shock detection optical fiber sensor in a first preferred embodiment according to the present invention, and FIG.1B is a cross-sectional view illustrating the shock detection optical fiber sensor of the first embodiment.

As shown in FIGS.1A and 1B, the shock detection optical fiber sensor 1 of the first preferred embodiment comprises a sensor portion 3 with a plastic optical fiber (POF) 2 for sensing a shock, a light-emitting element (not shown), such as a semiconductor laser or the like, connected to one end of the POF 2, and a light-receiving element (not shown), such as a photodiode or the like, connected to the other end of the POF 2. In this embodiment, as the POF 2, there is used a heat-resistant plastic optical fiber (HPOF) with heat resistance.

The POF 2 is varied in its light transmission characteristics according to shocks, and is constructed by covering the perimeter of a circular-cross-section core 4 with a cladding layer 5, and is formed concentrically in its cross section. As the core 4, there is used a synthetic resin with excellent heat resistance, such as an acryl resin, a cross-linked acryl resin (thermosetting acryl resin), or a silicon resin. Used as the cladding layer 5 is a synthetic resin with excellent heat resistance, moisture resistance and mechanical properties, such as fluororesins including fluoroethylene-propylene resin (FEP) or the like.

Because the cladding layer 5 of the POF 2 enhances the sensor sensitivity, it is desirable that the cladding layer 5 be as thin as possible in such a range that light is not leaked from the POF 2, and that the POF 2 has a sufficient strength. Preferably, the cladding layer 5 is not less than 4% (corresponding to 14 µm) thinner than a cladding layer of a generally used POF (core diameter: 1.5 mm, cladding layer thickness: 0.35 mm, outside diameter: 2.2 mm).

For example, the POF 2 has 1.5 mm core diameter, 0.335 mm cladding layer thickness, and 2.17 mm outside diameter. The sensor portion 3 has a corrugated plate 6 with a plurality of protrusions 8 arranged on one side of the POF 2 (at the bottom in FIGS.1A and 1B), and is constructed so that the POF 2 and corrugated plate 6 are covered with a mold plate 7, such as a synthetic resin or the like. Here, as the covering method by the mold plate, the POF 2 and corrugated plate 6 may be molded collectively and integrally by the mold plate, or alternatively the corrugated plate 6 may first be covered with the mold plate, and then the POF 2 inserted in a space provided in the mold plate.

The corrugated plate 6 has, in its surface, the plurality of substantially trapezoidal protrusions 8 formed at constant pitches in the longitudinal direction of the POF 2. The protrusions 8 each are respectively substantially trapezoidal in a side surface, and respectively have a planar portion 10 at a top. The protrusions 8 each have mutually the same height, and the POF 2 and each respective planar portion 10 are in contact when the POF 2 is disposed on the corrugated plate 6.

The protrusions 8 may each be formed to respectively have curved portions 9 with a predetermined curvature radius on both longitudinal sides of each respective planar portion 10, as shown in FIG.1A.

The corrugated plate 6 comprises hard plastic (on the order of Rockwell hardness (JIS K7202) R scale 118, M scale 80), brass (BS), stainless steel (SUS), etc. for example.

### Operation and advantages of Embodiment 1

When a shock (or a load) is applied (from above in FIGS. 1A and 1B) to the sensor portion 3, the POF 2 is pressed against the protrusions 8 of the corrugated plate 6, and the core 4 deforms. This causes a bend loss or a compression loss in the POF 2 according to the shock. This bend loss or compression loss is measured by injecting light from a light-emitting element provided at one end of the POF 2, receiving the light by a light-receiving element provided at the other end of the POF 2, and observing a variation (an attenuation) in quantity of the light transmitted through the POF 2. From the measured loss, an occurrence and a magnitude of the shock applied to the sensor portion 3 are found.

The attenuation in quantity of the light transmitted through the POF 2 is caused by the protrusions 8 crushing the POF 2 and deforming the core 4. As the cladding layer 5 is softer (lower in elastic modulus) than the core 4, the cladding layer 5 deforms first and the core 4 then begins to deform. For this reason, as the cladding layer 5 becomes thicker, the delay in the deformation of the core 4 becomes larger, and the sensor sensitivity therefore tends to decrease. However, because the cladding layer 5 of the shock detection optical fiber sensor 1 is as thin as possible in such a range that light is not leaked from the POF 2, and that the POF 2 has a sufficient strength, i.e., because the cladding layer 5 is not less than 4% thinner than a cladding layer of a conventional POF, the quantity of the light transmitted through the POF 2 can be attenuated even in the event of small shock (low load) application, and the sensor sensitivity can therefore be enhanced.

For example, instead of a conventional POF with 1.5 mm core diameter and 0.35 mm cladding layer thickness, use of the POF 2 with 1.5 mm core diameter and 0.335 mm cladding layer thickness (15 µm-decreased cladding layer 5 thickness) allows the shock detection optical fiber sensor 1 to provide a sensor sensitivity (loss, dB) approximately 1.5 times that of the conventional sensor when a static load is applied to the sensor portion 3.

Further, as the shock detection optical fiber sensor 1 has the substantially trapezoidal protrusions 8 formed in the corrugated plate 6, when a large shock is applied to the sensor portion 3, the stress applied to the POF 2 is dispersed by each respective planar portion 10 of the protrusions 8. For this reason, the POF 2 is unlikely to be broken. That is, the shock detection optical fiber sensor 1 allows its sensor sensitivity to be enhanced while ensuring its shock resistance.

The same is true even for the case of no curved portions 9 on both sides of each protrusion 8. It should be noted, however, that, when the protrusions 8 with the curved portions 9 are used, the stress applied to the POF 2 is more dispersed by the curved portions 9 than when the substantially trapezoidal protrusions 8 with no curved portions 9 are used, and therefore that the POF 2 is more unlikely to be broken.

### Embodiment 2

FIG.2 is a cross-sectional view illustrating a shock detection optical fiber sensor in a second preferred embodiment according to the present invention.

As shown in FIG.2, a sensor portion 23 of a shock detection optical fiber sensor 21 has, in place of the POF 2 shown in FIG.1B, a POF 22 comprising a general concentric-cross-section POF fabricated so that the cross sections of its core 24 and cladding layer 25 are molded in an elliptic shape whose minor axis is perpendicular to a corrugated plate 6. The other constituent elements of the shock detection optical fiber sensor 21 are similar to those of the shock detection optical fiber sensor 1 of FIG.1A.

A method for molding a POF 22 is as follows: A corrugated plate 6 is disposed on one side of a general POF. The POF is heated to a high temperature (about 150°C) to soften both its core and cladding layer. With both the core and cladding layer being softened, the POF is compressed from its opposite side (from above in FIG.2) by a flat plate. With the POF being compressed, the temperature is returned to normal temperature. This results in the POF 22 molded in the elliptic cross-sectional shape.

The POF 22 of this embodiment has 1.5 mm diameter of the core, and 0.335 mm minor-axial thickness of the cladding layer 25.

As the minor-axial thickness of the cladding layer 25 is thinned in a range that light is not leaked from the POF 22, and that the POF 22 has a sufficient strength, this shock detection optical fiber sensor 21 can also exhibit the same operation and advantages as in the shock detection optical fiber sensor 1 of FIG.1A.

Also, as the shock detection optical fiber sensor 21 has the elliptic cross section of the POF 22, the contact area between the POF 22 and the corrugated plate 6 is large compared to the POF 2 with circular cross section, and even when a stress is applied obliquely (in a direction unparallel to the minor axis of the POF 22), the POF 22 remains on the surface of the corrugated plate 6 (i.e., the POF 22 is unlikely to slide on the surface of the corrugated plate 6), and the core 24 can therefore be deformed efficiently. In effect, the shock detection optical fiber sensor 21 exhibits a high sensor sensitivity, compared to the shock detection optical fiber sensor 1 of FIG.1A.

### Embodiment 3

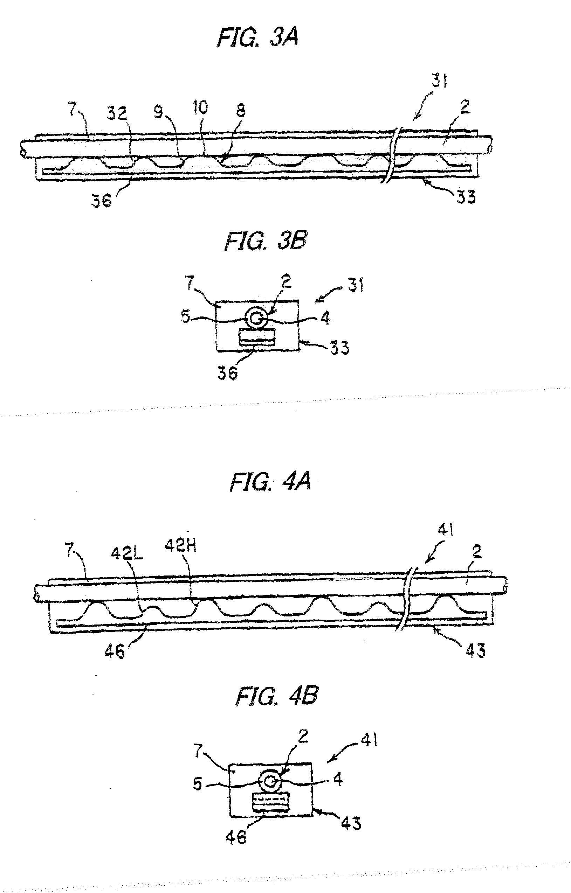

FIG.3A is a side view illustrating a shock detection optical fiber sensor in a third preferred embodiment according to the present invention, and FIG.3B is a cross-sectional view illustrating the shock detection optical fiber sensor of the third embodiment.

As shown in FIGS. 3A and 3B, a sensor portion 33 of a shock detection optical fiber sensor 31 has, in place of the corrugated plate 6 of FIG.1A, a corrugated plate 36 comprising 2 kinds of substantially trapezoidal protrusions 8, and curved protrusions 32, formed longitudinally and alternately at constant pitches. The protrusions 8 each are respectively substantially trapezoidal in a side surface, and respectively have a planar portion 10 at a top. The protrusions 8 each have mutually the same height, and the POF 2 and each respective planar portion 10 are in contact when the POF 2 is disposed on the corrugated plate 36. The protrusions 8 may each be formed to respectively have curved portions 9 with a predetermined curvature radius on both longitudinal sides of each respective planar portion 10.

The curved protrusions 32 each are respectively substantially semi-circle in a side surface, and respectively have a curved portion with a predetermined curvature radius.

The shock detection optical fiber sensor 31 may, in place of the POF 2, use the POF 22 of FIG.2, or a general POF. The other constituent elements of the shock detection optical fiber sensor 31 are similar to those of the shock detection optical fiber sensor 1 of FIG.1A.
In the structure of the shock detection optical fiber sensor 31, because the elastic coefficient of the mold plate 7 is smaller than that of the POF 2 and the corrugated plate 36, the load acting on the POF 2 is supported mainly by the corrugated plate 36. Because the substantially trapezoidal protrusions 8 have a large load-receiving area compared to the curved protrusions 32, the load acting on their unit area during shock application becomes smaller. Accordingly, the load limit of the shock detection optical fiber sensor 31, at which the POF 2 is broken, becomes higher than that of a conventional sensor, and its shock resistance is therefore enhanced.

Where the corrugated plate 36 has only the substantially trapezoidal protrusions 8, the shock resistance of the POF 2 is enhanced, but the loss of the POF 2 becomes small, and the sensor sensitivity therefore tends to decrease. Accordingly, the shock detection optical fiber sensor 31 uses the corrugated plate 36 formed by the alternate substantially trapezoidal protrusions 8, which enhance the shock resistance of the POF 2, and curved protrusions 32, which enhance the sensor sensitivity, to thereby be able to obtain the desired sensor sensitivity and shock resistance. Namely, the shock detection optical fiber sensor 31 is a balanced sensor sensitivity and shock resistance compatible sensor.

Also, by making the curvature radius of the curved protrusions 32 large, the shock resistance of the shock detection optical fiber sensor 31 can be increased. This is because the increase in the load-receiving area of the curved protrusions 32 with the deformation of the POF 2 during shock application, becomes larger as the curvature radius of the curved portion becomes larger. Further, the shock detection optical fiber sensor 31 allows the curvature radius of the curved portion 9, the longitudinal length of each respective planar portion 10, and patterns (e.g., the pitch between the protrusions) of the substantially trapezoidal protrusions 8, and/or the curvature radius and patterns of the curved protrusions 32, to be adjusted beforehand (preset) in compliance with sensor sensitivity and shock resistance, to thereby be able to obtain the desired sensor sensitivity and shock resistance,

### Embodiment 4

FIG.4A is a side view illustrating a shock detection optical fiber sensor in a fourth preferred embodiment according to the present invention, and FIG. 4B is a cross-sectional view illustrating the shock detection optical fiber sensor of the fourth embodiment.

As shown in FIGS.4A and 4B, a sensor portion 43 of a shock detection optical fiber sensor 41 has, in place of the corrugated plate 6 of FIG.1A, a corrugated plate 46 comprising 2 kinds of protrusions of 2 different levels in height: high curved protrusions 42H, and low curved protrusions 42L lower in height than the high curved protrusions 42H, the high and low curved protrusions 42H and 42L formed longitudinally and alternately at constant pitches. The high curved protrusions 42H each have mutually the same height, and the POF 2 and the peak of each high curved protrusion 42H are in contact when the POF 2 is disposed on the corrugated plate 46. The low curved protrusions 42L each also have mutually the same height.

The shock detection optical fiber sensor 41 may, in place of the POF 2, use the POF 22 of FIG.2, or a general POF. The other constituent elements of the shock detection optical fiber sensor 41 are similar to those of the shock detection optical fiber sensor 1 of FIG.1A.

when a relatively small shock is applied to the shock detection optical fiber sensor 41, the POF 2 comes into contact with the high curved protrusions 42H only, and the load received by the POF 2 due to the shock is therefore supported by the high curved protrusions 42H only.

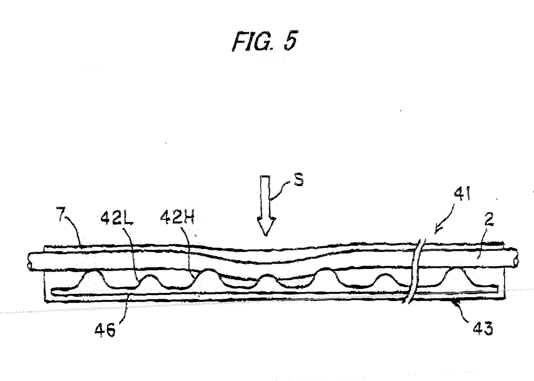

Also, as shown in FIG. 5, in the case of relatively large shock application, when the load acts initially, the POF 2 comes into contact with the high curved protrusions 42H only, and gradually crushes and deforms more than the difference in height between the high and low curved protrusions 42H and 42L, so that the POF 2 comes into contact with the high and low curved protrusions 42H and 42L. The POF 2 contact with the high and low curved protrusions 42H and 42L allows an increase in the load-receiving area, and therefore a decrease in the load acting on unit cross-section area of the POF 2.

In this manner, when subject to relatively small shocks, the shock detection optical fiber sensor 41 causes the load acting on the POF 2 to be supported by the small area (the high curved protrusions 42H only), while, when subject to relatively large shocks, the shock detection optical fiber sensor 41 causes the load acting on the POF 2 to be supported by the large area (the high and low curved protrusions 42H and 42L). For that reason, the shock detection optical fiber sensor 41 allows sensitive detection of relatively small shocks, and enhancement of its shock resistance when subject to relatively large shocks. Namely, the shock detection optical fiber sensor 41 is a balanced sensor sensitivity and shock resistance compatible sensor.

Further, the shock detection optical fiber sensor 41 allows the curvature radius, height, and patterns of the high curved protrusions 42H, and/or the curvature radius, height, and patterns of the low curved protrusions 42L, to be adjusted beforehand in compliance with sensor sensitivity and shock resistance, to thereby be able to obtain the desired sensor sensitivity and shock resistance.

Also, by varying the difference in height between the protrusions 3 levels or more, the sensor sensitivity and shock resistance can be adjusted more finely.

Although, in the above embodiments, the corrugated plate is disposed on one side of the POF, the corrugated plate may be disposed on both sides of the POF. In this case, the sensor sensitivity is more enhanced.

This invention is not limited to any of the above-described embodiments, but may embody various modifications in scope that may occur to one skilled in the art without any departure from the scope of the appended claims.

### INDUSTRIAL APPLICABILITY

The present invention can provide a shock detection optical fiber sensor with enhanced sensor sensitivity and POF shock resistance.

## Claims

1. A shock detection optical fiber sensor, comprising:
a plastic optical fiber;
a corrugated plate comprising a plurality of protrusions arranged in a longitudinal direction of the plastic optical fiber, and formed opposite the plastic optical fiber;
a mold plate covering the plastic optical fiber and the corrugated plate;
a light emitting element connected to one end of the plastic optical fiber; and
a light receiving element connected to the other end of the plastic optical fiber.

2. The shock detection optical fiber sensor according to claim 1, wherein:
the corrugated plate comprises a plurality of corrugated plates arranged in the longitudinal direction of the plastic optical fiber.

3. The shock detection optical fiber sensor according to claim 1, wherein:
the plastic optical fiber comprises the cladding layer whose thickness is not less than 4% thinner than a cladding layer of a generally used plastic optical fiber.

4. The shock detection optical fiber sensor according to claim 1, wherein:
the plastic optical fiber comprises an elliptic cross section whose minor axis is perpendicular to the corrugated plate.

5. A shock detection optical fiber sensor, comprising:
a plastic optical fiber;
a corrugated plate comprising a plurality of protrusions arranged in the longitudinal direction of the plastic optical fiber, and formed opposite the plastic optical fiber;
a mold plate covering the plastic optical fiber and the corrugated plate;
a light emitting element connected to one end of the plastic optical fiber; and
a light receiving element connected to the other end of the plastic optical fiber,
wherein the plurality of protrusions comprise a substantially trapezoidal protrusion comprising a planar portion formed opposite the plastic optical fiber.

6. The shock detection optical fiber sensor according to claim 5, wherein:
the plurality of protrusions comprise a curved protrusion comprising a curved portion formed opposite the plastic optical fiber.

7. The shock detection optical fiber sensor according to claim 5, wherein:
the plurality of protrusions comprise the substantially trapezoidal protrusion and the curved protrusion arranged alternately.

8. The shock detection optical fiber sensor according to claim 5, wherein:
the plurality of protrusions comprise curved portions formed on both sides of the planar portion in the longitudinal direction of the plastic optical fiber.

9. The shock detection optical fiber sensor according to claim 5, wherein:
the plurality of protrusions comprise planar portions whose lengths are mutually different in the longitudinal direction of the plastic optical fiber.

10. A shock detection optical fiber sensor, comprising:
a plastic optical fiber;
a corrugated plate comprising a plurality of protrusions arranged in a longitudinal direction of the plastic optical fiber, and formed opposite the plastic optical fiber;
a mold plate covering the plastic optical fiber and the corrugated plate;
a light emitting element connected to one end of the plastic optical fiber; and
a light receiving element connected to the other end of the plastic optical fiber,
wherein the plurality of protrusions comprise a curved protrusion comprising a curved portion formed opposite the plastic optical fiber, the curved protrusion comprising 2 or more protrusions that are different in height.

11. The shock detection optical fiber sensor according to claim 10, wherein:
the curved protrusion comprises high and low protrusions that are mutually different in height, and the high and low protrusions are arranged alternately.
